# FASCICULE DE BREVET EUROPEEN

(11) **EP 1 164 327 B1**
(45) Date de publication et mention de la délivrance du brevet: **02.08.2006**
(21) Numéro de dépôt: 01420139.6
(22) Date de dépôt: 14.06.2001
(51) Int. Cl.: F16L 37/248, F16L 37/44

(54) **Raccord à rampe de verrouillage**
Kupplung mit Verriegelungsschrägen
Connector with locking ramp

(30) Priorité: 15.06.2000 FR 0007648
(43) Date de publication de la demande: 19.12.2001
(73) Titulaire: STÄUBLI FAVERGES, 74210 Faverges (FR)
(72) Inventeur: Lacroix, Jean Jacques, 74330 Lovagny (FR)
(74) Mandataire: Myon, Gérard Jean-Pierre

(56) Documents cités:
- GB-A- 2 155 985
- US-A- 2 305 841
- US-A- 4 909 545

## Description

L'invention a trait à un raccord qui comprend un premier et un second élément propres à s'emmancher l'un dans l'autre pour la jonction amovible de deux canalisations.

Il est connu d'utiliser des raccords avec double étanchéité pour des applications dans le domaine de la chimie, pour la connexion de circuits d'huile de refroidissement sur des presses ou pour le remplissage d'un réservoir de véhicule. Ces raccords peuvent avoir des diamètres nominaux importants en vue d'assurer des débits élevés.

Avec les raccords de diamètres élevés, les efforts d'accouplement sont importants au point qu'il est parfois difficile de manoeuvrer à la main de tels raccords. En effet, les efforts d'accouplement doivent vaincre les efforts résistants exercés par un ou plusieurs ressorts sur un ou plusieurs clapets du raccord, ces ressorts ayant des constantes de raideurs d'autant plus importantes que le diamètre du raccord est important. Dans la première partie de la course d'accouplement, les efforts d'accouplement doivent également vaincre les efforts de friction de joints d'étanchéité.

Il est connu, notamment par les raccords commercialisés par la déposante sous la référence SPH/BA, d'équiper un raccord dit rapide d'une ou plusieurs rampes de verrouillage. Un tel raccord est decrit dans le document GB-A 2,155,985. Un tel raccord est représenté à la figure 7 et comprend un élément mâle A pourvu de deux pions radiaux, dont un seul apparaît sur la figure 7 avec la référence 101. L'élément femelle B comprend une jupe 102 à l'intérieur de laquelle être inséré l'élément mâle et dans laquelle sont ménagées deux entailles, dont une seule est visible à la figure 7 avec la référence 103. La géométrie de l'entaille 103 est telle qu'un effort important doit être exercé pour le rapprochement des éléments A et B lorsque le pion 101 est au voisinage de l'ouverture d'entrée 103a de l'entaille 103. Il en résulte que ce type de raccords ne peut pas être mis en oeuvre avec des diamètres importants, les efforts à exercer ne permettant pas une manoeuvre à la main.

Il est également connu d'utiliser des raccords vissés qui permettent de vaincre les efforts de rappel élastiques exercés par les ressorts et les efforts de friction dus aux joints. Cependant, l'opération d'accouplement est relativement lente dans la mesure où un nombre de tours important doit être utilisé pour obtenir une ouverture maximale du raccord.

C'est à ces inconvénients qu'entend plus particulièrement remédier l'invention en proposant un nouveau raccord qui comprend une rampe de verrouillage et qui peut être manoeuvré à la main, même lorsqu'il est réalisé avec un diamètre nominal relativement important.

Dans cet esprit, l'invention concerne un raccord pour la jonction amovible de canalisations qui comprend un premier et un second éléments propres à s'emmancher l'un dans l'autre selon un axe principal de ce raccord, le premier élément comprenant au moins une rampe formée dans une bague annulaire pour la réception d'une partie en saillie radiale du second élément en vue du verrouillage de ces éléments en configuration passante du raccord. La rampe comprend une ouverture d'entrée définie au niveau d'un bord libre de la bague. Ce raccord est caractérisé en ce que la rampe a, par rapport à un plan perpendiculaire à l'axe principal précité, un angle d'inclinaison plus faible dans une première zone, proche de l'ouverture d'entrée, que l'angle d'inclinaison correspondant dans une seconde zone, plus éloignée de cette ouverture que la première zone.

Grâce à l'invention, la géométrie de la rampe permet de transformer le couple exercé par un opérateur pour assembler les éléments constitutifs du raccord en un effort adapté en permanence aux efforts résistants générés par des moyens de rappel élastique ou des joints du raccord. L'angle d'inclinaison relativement faible utilisé au voisinage de l'ouverture de la rampe permet d'exercer un effort relativement intense par la rotation relative des éléments précités, ce qui génère un effort de poussée important sur le ou les clapets du raccord en vue de leur décollement par rapport à leurs sièges respectifs. Ensuite, c'est-à-dire lorsque la partie en saillie du second élément est dans la seconde zone de la rampe, le déplacement des éléments constitutifs du raccord selon la direction de l'axe principal est plus rapide pour une rotation relative donnée de ces éléments, ce qui correspond au fait que les efforts résistants principaux ont déjà été vaincus. Ainsi, le couple de rotation que doit exercer un opérateur sur la bague de verrouillage est sensiblement constant au cours de l'accouplement des éléments du raccord, ce couple étant démultiplié de façon adaptée sur la longueur de la rampe de façon à générer un effort intense au début de l'accouplement et à permettre un déplacement axial relativement rapide de ces éléments lors d'une étape ultérieure de l'accouplement. Le temps de manoeuvre du raccord est réduit et optimisé, alors qu'il demeure adapté à une utilisation manuelle. En particulier, on peut utiliser des ressorts relativement puissants pour le rappel élastique des clapets en direction de leurs sièges respectifs, ce qui permet de mieux assurer l'appui des faces en contact des éléments mâles et femelles du raccord. On peut, en outre, utiliser des joints relativement serrés, en vue d'une étanchéité améliorée par rapport aux raccords connus.

Selon un premier aspect avantageux de l'invention, la rampe comprend une troisième zone, plus éloignée de l'ouverture que la seconde zone et dont l'angle d'inclinaison par rapport au plan précité est plus faible que l'angle d'inclinaison correspondant de la seconde zone. Cette troisième zone constitue une zone de transition entre la seconde zone et une encoche de verrouillage de la partie en saillie du second élément. Cette troisième zone permet de limiter la vitesse axiale des éléments constitutifs du raccord lors de la phase terminale de leur verrouillage, phase dans laquelle les ressorts sont les plus comprimés et exercent les efforts résistants les plus intenses, et lors de la phase initiale de leur déverrouillage.

Selon des modes de réalisation préférés de l'invention, les zones constitutives de la rampe peuvent être globalement rectilignes ou courbes, auquel cas leurs angles d'inclinaison respectifs sont définis comme leurs angles d'inclinaison moyen sur la longueur de chaque zone.

On peut, en outre, prévoir que la partie en saillie du second élément comprend un galet monté fou sur un axe radial, le diamètre de ce galet étant inférieur à la largeur de la rampe. L'utilisation d'un galet permet d'améliorer le rendement du transfert de mouvement entre la rotation de la bague et le déplacement axial des éléments précités, grâce à une limitation des frottements générés.

Selon un premier mode de réalisation avantageux de l'invention, le premier élément est apte à pénétrer dans le second élément, le diamètre extérieur de la bague étant inférieur au diamètre intérieur d'un manchon du second élément équipé de la partie en saillie qui s'étend radialement en direction de l'axe principal du raccord. Dans ce cas, le premier élément constitue l'élément mâle du raccord alors que le second élément en constitue l'élément femelle.

Selon un autre mode de réalisation avantageux de l'invention, le premier élément est apte à coiffer le second élément, le diamètre intérieur de la bague étant supérieur au diamètre extérieur d'un corps du second élément à partir duquel s'étend radialement, à l'opposé de l'axe principal du raccord, la partie en saillie. Dans ce cas, le premier élément constitue l'élément femelle du raccord, alors que le second élément en constitue l'élément mâle.

Quel que soit le mode de réalisation considéré, on peut prévoir que la bague est pourvue de deux rampes sensiblement diamétralement opposées alors que le second élément est pourvu de deux parties en saillie également diamétralement opposées. Un raccord avec plus de deux rampes peut, bien sûr, être envisagé en restant dans le cadre de la présente invention.

Selon différents modes de réalisation, la rampe peut avoir une profondeur inférieure à l'épaisseur de la bague, auquel cas elle est formée par une rainure ménagée sur une surface radiale interne ou externe de la bague, ou être formée par une entaille ménagée dans cette bague.

L'invention sera mieux comprise et d'autres avantages de celle-ci apparaîtront plus clairement à la lumière de la description qui va suivre de deux modes de réalisation d'un raccord conforme à son principe, donnée uniquement à titre d'exemple et faite en référence aux dessins annexés dans lesquels :
- la figure 1 est une vue de côté, avec arrachement partiel d'un raccord conforme à l'invention avant accouplement de ses éléments mâle et femelle ;
- la figure 2 est une coupe axiale du raccord de la figure 1 lors d'une première étape de l'accouplement de ses éléments mâle et femelle ;
- la figure 3 est une coupe analogue à la figure 2 en configuration verrouillée et passante du raccord ;
- la figure 4 est une vue développée d'une rampe du raccord des figures 1 à 3 ;
- la figure 5 est une vue extérieure en perspective d'un raccord conforme à un second mode de réalisation de l'invention et

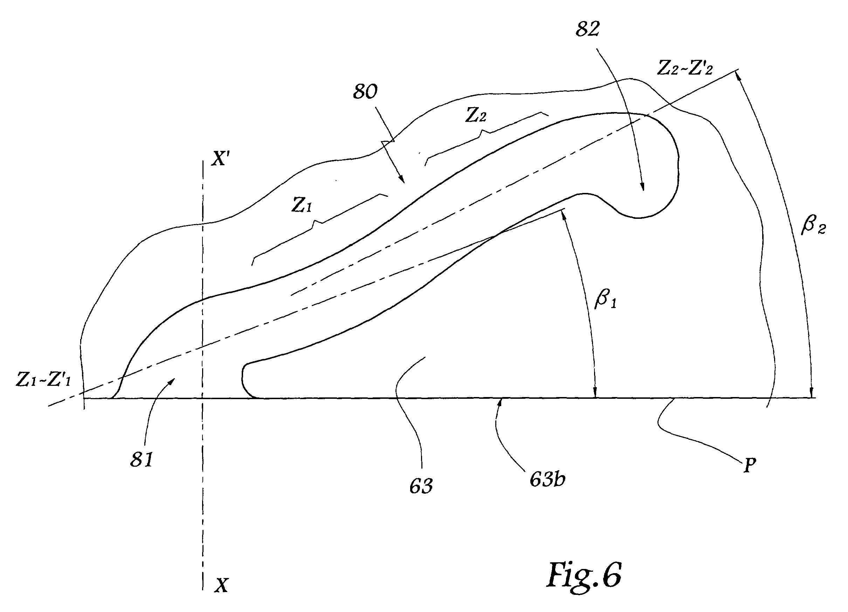

- la figure 6 est une vue développée d'une rampe du raccord de la figure 5.

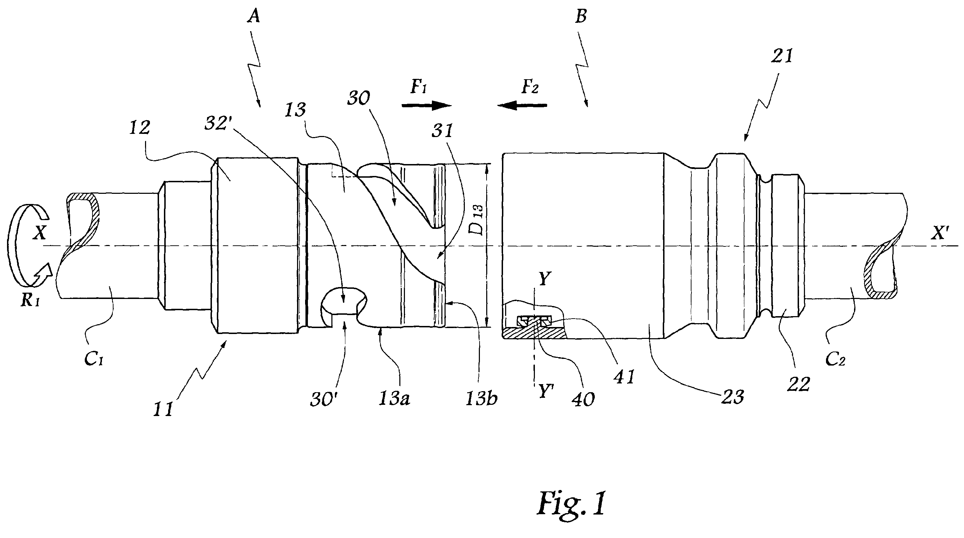

Le raccord représenté sur les figures 1 à 4 comprend un élément mâle A et un élément femelle B prévus l'un et l'autre avec une forme globalement cylindrique à section circulaire. La partie arrière de l'élément mâle A est raccordée fluidiquement à une première canalisation C₁, alors que la partie arrière de l'élément femelle B est raccordée à une seconde canalisation C₂.

On note X-X' l'axe principal du raccord formé des éléments A et B, c'est-à-dire l'axe principal des éléments A et B dans les configurations des figures 1 à 3.

L'élément A comprend un corps 11 formé d'une base 12 et d'une bague 13 de forme globalement cylindrique. Un poussoir 14 est prévu pour être monté fixe par rapport au corps 11 en étant centré sur l'axe X-X'.

Un clapet annulaire 15 est disposé autour du poussoir 14 et chargé élastiquement par un ressort 16 en direction d'un siège 17 formé à l'intérieur de la bague 13. Deux joints 18 et 19 assurent respectivement l'étanchéité entre le clapet 15 et le poussoir 14 d'une part, et entre ce clapet et la bague 13 d'autre part.

L'élément femelle B comprend un corps 21 formé d'une partie centrale 22 et d'un manchon 23 monté autour de la partie 22 et s'étendant au-delà de sa face avant 22a à l'opposé de la canalisation C₂. La partie 22 forme également une butée centrale 22b disposée sur l'axe X-X' dans la configuration des figures 1 à 3 et permettant l'appui d'un ressort 26 exerçant, sur un clapet 25, un effort élastique tentant à le plaquer sur un siège 27 formé dans la partie 22. Un joint 28 monté sur le clapet 25 assure l'étanchéité entre ce clapet et la partie 22.

La bague 13 est pourvue de deux rampes formées par des rainures 30 et 30' ménagées dans la surface radiale externe 13a de la bague 13.

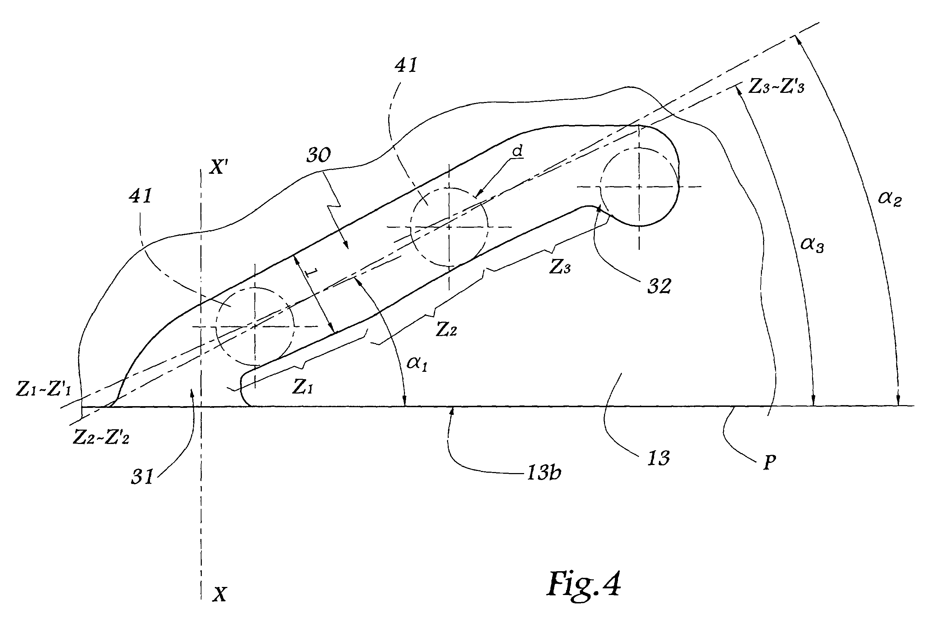

La géométrie de la rainure 30 apparaît plus clairement à la figure 4. Cette rainure s'étend à partir d'une ouverture 31 formée au niveau d'un bord libre 13b de la bague 13 opposé à la canalisation C₁ et définissant la face avant de l'élément A. La rainure 30 comprend également une encoche 32 qui constitue l'extrémité de la rainure 30 opposée à l'ouverture 31.

En partant de l'ouverture 31, la rainure 30 est divisée en trois zones Z1, Z2, Z3 globalement rectilignes, la zone Z1 étant plus proche de l'ouverture 31 que la zone Z2 qui est elle-même plus proche de cette ouverture que la zone Z3. On note respectivement Z1-Z'1, Z2-Z'2 et Z3-Z'3, les axes géométriques centraux des zones Z1, Z2 et Z3. On note α₁ l'angle entre l'axe Z1-Z'1 et un plan P perpendiculaire à l'axe X-X' et passant par le bord libre 13b. De la même façon, on note α₂ l'angle entre l'axe Z2-Z'2 et le plan P et α₃ l'angle entre l'axe Z3-Z'3 et le plan P.

L'angle α₁ est inférieur à l'angle α₂, alors que l'angle α₃ est également inférieur à l'angle α₂. Les angles α₂ et α₃ peuvent être égaux ou différents.

L'élément femelle B est pourvu de deux tétons 40 et 40' s'étendant chacun selon une direction radiale Y-Y' à partir de la surface intérieure 23a du manchon 23 et en direction de l'axe X-X'.

Ces tétons 40 et 40' sont respectivement équipés d'un galet 41, 41' monté fou sur le téton correspondant.

Les tétons 40 et 40' sont représentés monoblocs avec le manchon 23 sur les figures. Ils pourraient cependant être rapportés sur ce manchon et immobilisés par tout moyen adéquat.

Lorsqu'il convient d'emmancher l'élément mâle A dans l'élément femelle B, ceux-ci sont rapprochés l'un de l'autre, comme représenté comme par les flèches F₁ et F₂ à la figure 1, jusqu'à ce que le bord libre 13b de la bague 13 vienne en appui contre les galets 41 et 41'. Il est alors possible de faire subir à l'élément mâle A un mouvement de rotation représenté par la flèche R₁, ce qui a pour effet de déplacer les ouvertures des rainures 30 et 30' jusqu'en regard des galets 41 et 41'. En d'autres termes, on peut rechercher, "en aveugle", la position d'engagement des galets 41 et 41' dans les ouvertures, 31 et équivalente, des rainures 30 et 30'.

Comme l'effort de rapprochement est maintenu, et comme le diamètre d de ces galets est inférieur à la largeur l de ces rainures, les galets pénètrent dans les ouvertures 31 et équivalente. En poursuivant ce mouvement de rotation, chaque galet 41 et 41' progresse en direction de l'encoche 32 ou 32' de la rainure dans laquelle il est engagé.

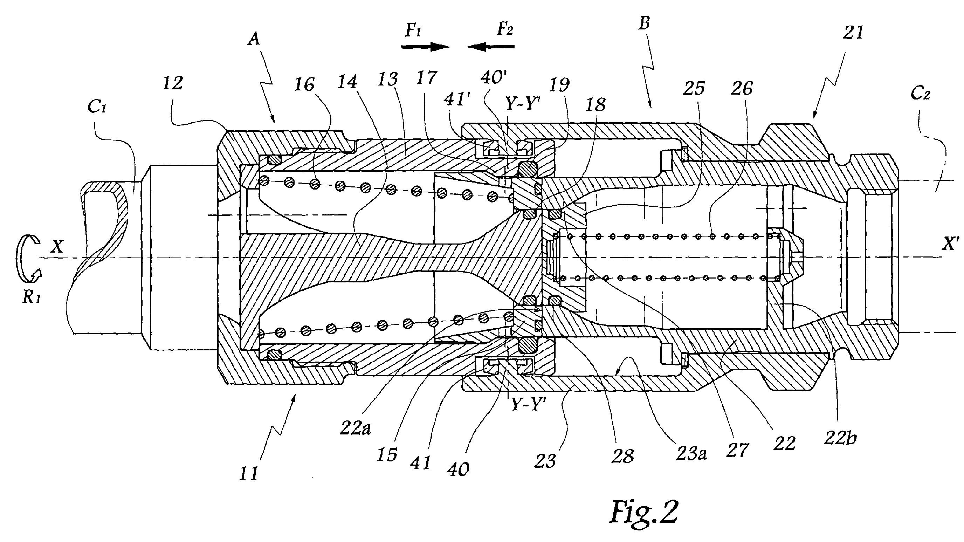

On est alors dans la position de la figure 2 où l'effort de rapprochement représenté par les flèches F₁ et F₂ et généré par la poursuite de la rotation R₁ doit vaincre les efforts de rappel élastique générés par les ressorts 16 et 26 et les forces de frottement dues aux joints 18, 19 et 28. Cet effort doit être intense.

Compte tenu du fait que l'angle α₁ est relativement faible, la rotation R₁ de la bague 13 autour de l'axe X-X' permet de générer, pour chaque rotation unitaire relative des éléments A et B, un déplacement limité et un effort de rapprochement intense, le galet 41 étant alors dans la zone Z1, comme représenté en traits mixtes à la figure 4.

Ensuite, lorsque les clapets 15 et 25 ont été respectivement décollés de leurs sièges respectifs 17 et 27, et lorsque les joints 18, 19 et 28 ne freinent plus leur déplacement, l'intensité des efforts F₁ et F₂ générés par une rotation unitaire R₁ peut être diminuée, notamment du fait qu'une circulation de fluide entre les canalisations C₁ et C₂ commence à s'établir. Dans ces conditions, le déplacement axial unitaire obtenu pour chaque rotation unitaire de la bague 13 peut être plus important, ce qui correspond au fait que l'angle α₂ est supérieur à l'angle α₁, le galet 41 représenté en traits mixtes dans la zone Z₂ progressant plus rapidement parallèlement à l'axe X-X' lorsqu'il est dans cette zone, que lorsqu'il est dans la zone Z1.

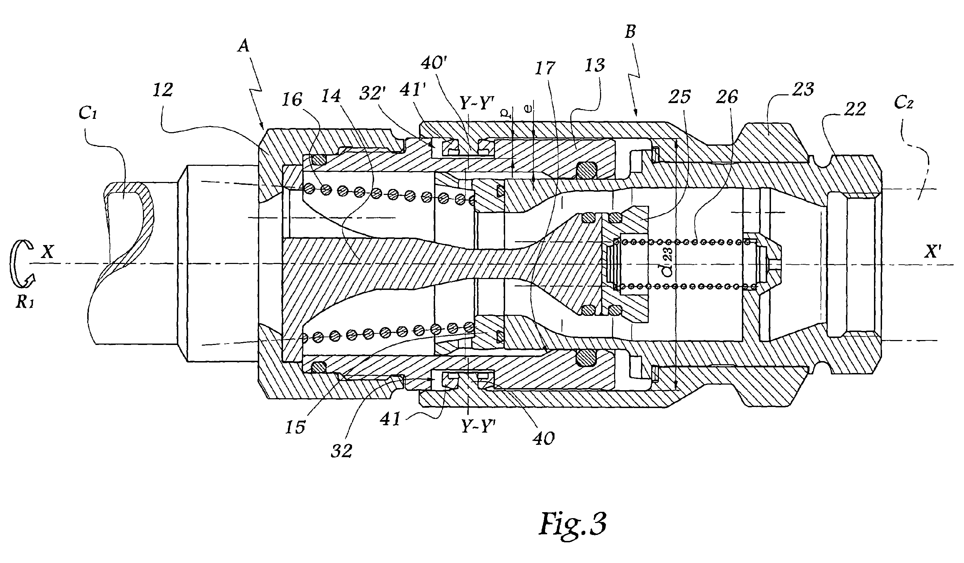

Au terme de l'accouplement, c'est-à-dire dans la configuration de la figure 3, les galets 41 et 41' sont reçus dans les encoches terminales 32 et 32', ce qui évite un mouvement en sens inverse de ces galets dans les rampes.

Grâce à l'invention, le couple que doit exercer un opérateur pour faire tourner la bague 13 dans le sens de la flèche R₁ est relativement constant alors que l'effort de rapprochement généré F₁, F₂ est intense dans la configuration de la figure 2 et qu'une progression axiale rapide des éléments A et B l'un par rapport à l'autre est obtenue lorsque les clapets sont décollés de leurs sièges respectifs.

La zone Z3 a un angle d'inclinaison α₃ plus faible que l'angle α₂ pour tenir compte de l'augmentation de l'effort résistant exercé par les ressorts qui sont fortement comprimés en fin de course.

Comme il ressort des figures 2 et 3, la profondeur P des rainures 30 et 30' est inférieure à l'épaisseur e de la bague 13, ce qui correspond au fait que ces rainures ne débouchent pas dans le volume intérieur de l'élément A. Les rainures 30 et 30' n'affaiblissent pas sensiblement la bague 13 sur le plan mécanique.

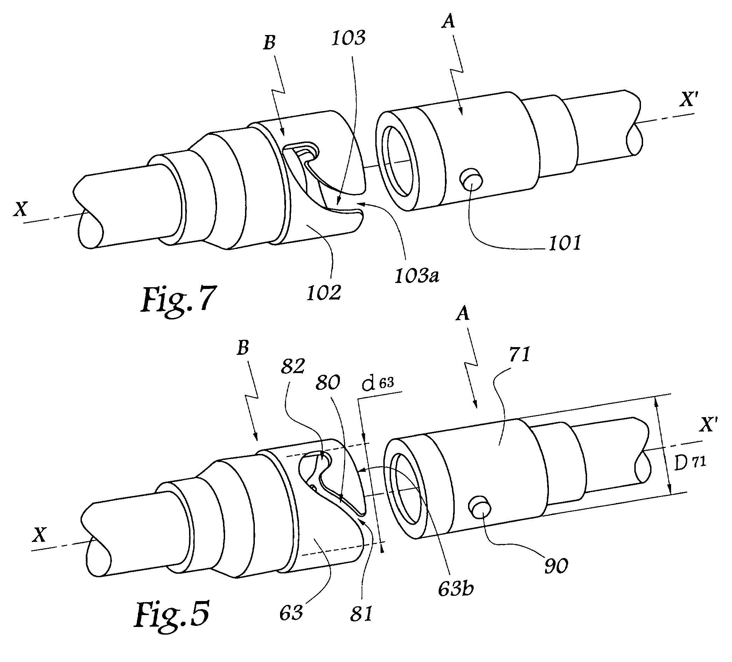

Dans le second mode de réalisation de l'invention représenté à la figure 5, l'élément mâle A comprend un corps 71 équipé de tétons diamétralement opposés, dont un seul apparaît à la figure 5 avec la référence 90. L'élément femelle B comprend une bague 63 pourvue de deux entailles, dont une seule apparaît à la figure 5 avec la référence 80. L'entaille 80 est formée dans toute l'épaisseur de la bague 63.

L'entaille 80 comprend une ouverture d'entrée 81 et une encoche 82 de blocage d'un téton 90 ou équivalent alors qu'elle est divisée en deux zones Z1 et Z2 se faisant suite entre l'ouverture 81 et l'encoche 82. Les zones Z1 et Z2 sont courbes et l'on définit un axe moyen Z1-Z'1 correspondant à l'orientation moyenne de la zone Z₁ par rapport au bord libre 63b de la bague 63. De la même façon, on définit un axe Z₂-Z'₂ correspondant à l'inclinaison moyenne de la zone Z₂.

On note respectivement β₁ et β₂ les angles d'inclinaison des axes Z₁-Z'₁ et Z₂-Z'₂ par rapport à un plan P passant par le bord libre 63b et perpendiculaire à l'axe central X-X' du raccord.

Conformément à l'invention, l'angle β₁ est inférieur à l'angle β₂.

Dans ce second mode de réalisation, les rampes pourraient également être formées par des rainures qui seraient ménagées sur la surface radiale interne de la bague 63 dans son épaisseur.

Les diamètres respectifs des bagues et des corps des raccords de l'invention sont adaptés à leur mode de coopération. Plus précisément, le diamètre extérieur D₁₃ de la bague 13 est plus petit que le diamètre intérieur d₂₃ du manchon 23, alors que le diamètre intérieur d₆₃ de la bague 63 est plus grand que le diamètre extérieur D₇₁ du corps 71 qui porte les tétons 90.

Les tétons 90 du second mode de réalisation pourraient également être équipés de galets afin de limiter les frottements dans les rampes, 80 et équivalente, de la bague 63.

Selon une variante de l'invention, le second mode de réalisation pourrait comprendre une zone terminale équivalente à la zone Z₃ du premier mode de réalisation. En fait, dans le cas de zones courbes, l'ensemble de ces zones Z1, Z2 et éventuellement Z3 forme une courbe convexe du côté d'appui du têton ou du galet.

## Revendications

1. Raccord pour la jonction amovible de canalisations comprenant un premier et un second élément propres à s'emmancher l'un dans l'autre selon un axe principal dudit raccord, le premier élément comprenant au moins une rampe formée dans une bague pour la réception d'une partie en saillie radiale du second élément en vue du verrouillage desdits éléments en configuration passante dudit raccord, ladite rampe comprenant une ouverture d'entrée définie au niveau d'un bord libre de ladite bague, **caractérisé en ce que** ladite rampe (30, 30'; 80) a, par rapport à un plan (P) perpendiculaire audit axe principal (X-X'), un angle d'inclinaison (α₁ ; β₁) plus faible dans une première zone (Z₁) proche de ladite ouverture (31 ; 81) que l'angle d'inclinaison correspondant (α₂ ; β₂) dans une seconde zone (Z₂), plus éloignée de ladite ouverture que ladite première zone.

2. Raccord selon la revendication 1, **caractérisé en ce que** ladite rampe (30, 30') comprend une troisième zone (Z₃), plus éloignée de ladite ouverture que ladite seconde zone (Z₂) et dont l'angle d'inclinaison (α₃) par rapport audit plan (P) est plus faible que l'angle d'inclinaison (α₂) de ladite seconde zone.

3. Raccord selon l'une des revendications précédentes, **caractérisé en ce que** lesdites zones (Z₁-Z₃) de ladite rampe sont globalement rectilignes.

4. Raccord selon l'une des revendications 1 ou 2, **caractérisé en ce que** lesdites zones (Z₁, Z₂, Z₃) de ladite rampe sont courbes, leurs angles d'inclinaison respectifs étant définis comme leurs angles d'inclinaison moyens (β₁, β₂) sur la longueur de chaque zone.

5. Raccord selon l'une des revendications précédentes, **caractérisé en ce que** ladite partie en saillie comprend un galet (41, 41') monté fou sur un axe radial (40, 40'), le diamètre (d) dudit galet étant inférieur à la largeur (1) de ladite rampe (30, 30').

6. Raccord selon l'une des revendications précédentes,
**caractérisé en ce que** ledit premier élément (A) est apte à pénétrer dans ledit second élément (B), le diamètre extérieur (D₁₃) de ladite bague (13) étant inférieur au diamètre intérieur (d₂₃) d'un manchon (23) du second élément équipé de ladite partie en saillie (40, 40', 41, 41') qui s'étend radialement en direction dudit axe (X-X').

7. Raccord selon l'une des revendications 1 à 5, **caractérisé en ce que** ledit premier élément (B) est apte à coiffer ledit second élément (A), le diamètre intérieur (d₆₃) de ladite bague (63) étant supérieur au diamètre extérieur (D₇₁) d'un corps (71) du second élément à partir duquel s'étend radialement, à l'opposé dudit axe (X-X'), ladite partie en saillie (90).

8. Raccord selon l'une des revendications précédentes, **caractérisé en ce que** ladite bague (13 ; 63) est pourvue de deux rampes (30, 30' ; 80) sensiblement diamétralement opposées, alors que ledit second élément (B ; A) est pourvu de deux parties en saillies (40 , 40', 41, 41' ; 90) également diamétralement opposées.

9. Raccord selon l'une des revendications précédentes, **caractérisé en ce que** ladite rampe a une profondeur (p) inférieure à l'épaisseur (e) de ladite bague (13), ladite rampe étant formée par une rainure (30, 30') ménagée sur une surface radiale (13a) de ladite bague.

10. Raccord selon l'une des revendications 1 à 8, **caractérisé en ce que** ladite rampe est formée par une entaille (80) ménagée dans ladite bague (63).

## Claims

1. Connector for detachably joining pipes and comprising a first and a second element capable of fitting the one inside the other along a main axis of said connector, the first element comprising at least one ramp formed in a collar for receiving a radially projecting part of the second element with a view to locking said elements in an operating configuration of said connector, said ramp comprising an entry opening defined at the level of a free edge of said collar, **characterised in that** said ramp (30, 30'; 80) has, in relation to a plane (P) perpendicular to said main axis (X=X'), an angle of inclination (α₁; β₁) which is smaller in a first zone (Z1) close to said opening (31; 81) than the corresponding angle of inclination (α₂; β₂) in a second zone (Z2) which is further away from said opening than said first zone.

2. Connector according to claim 1, **characterised in that** said ramp (30, 30') includes a third zone (Z3), further away from said opening than said second zone (Z2), and the angle of inclination (α₃) of which, in relation to said plane (P), is smaller than the angle of inclination (α₂) of said second zone.

3. Connector according to one of the preceding claims, **characterised in that** said zones (Z1-Z3) of said ramp are rectilinear overall.

4. Connector according to one of claims 1 or 2, **characterised in that** said zones (Z1, Z2, Z3) of said ramp are curved, their respective angles of inclination being defined as their mean angles of inclination (β₁, β₂) over the length of each zone.

5. Connector according to one of the preceding claims, **characterised in that** said projecting part comprises a roller (41, 41'), loosely mounted on a radial axis (40, 40'), the diameter (d) of said roller being smaller than the width (1) of said ramp (30, 30').

6. Connector according to one of the preceding claims, **characterised in that** said first element (A) is capable of penetrating into said second element (B), the outside diameter (D₁₃) of said collar (13) being smaller than the inside diameter (d₂₃) of a sleeve (23) of the second element equipped with said projecting part (40, 40', 41, 41') which extends radially in the direction of said axis (X-X').

7. Connector according to one of claims 1 to 5, **characterised in that** said first element (B) is capable of overlapping said second element (A), the inside diameter (d₆₃) of said collar (63) being greater than the outside diameter (D₇₁) of a body (71) of the second element from which said projecting part (90) extends radially, in the opposite direction from said axis (X-X').

8. Connector according to one of the preceding claims, **characterised in that** said collar (13; 63) is provided with two, substantially diametrically opposite, ramps (30, 30'; 80) whilst said second element (B; A) is provided with two projecting parts (40, 40', 41, 41'; 90) which are also diametrically opposite.

9. Connector according to one of the preceding claims, **characterised in that** said ramp has a depth (p) which is smaller than the thickness (e) of said collar (13), said ramp being formed by a groove (30, 30') provided on a radial surface (13a) of said collar.

10. Connector according to one of claims 1 to 8, **characterised in that** said ramp is formed by a recess (80) provided in said collar (63).

## Patentansprüche

1. Kupplung für die lösbare Verbindung von Leitungen ein erstes und ein zweites Element umfassend, die geeignet sind entsprechend einer Hauptachse der Kupplung ineinanderzugreifen, wobei das erste Element mindestens eine in einem Ring gebildete Rampe für die Aufnahme eines radial hervorspringenden Teils des zweiten Elements im Hinblick auf die Verriegelung der Elemente in einer Durchgangsstellung der Kupplung umfasst, wobei die Rampe eine Eintrittsöffnung umfasst, die an einem freien Rand des Ringes festgelegt ist,
**dadurch gekennzeichnet, dass** die Rampe (30, 31'; 80) in Bezug auf eine Ebene (P) senkrecht zur Hauptachse (X-X') einen Neigungswinkel (α₁; β₂) aufweist, der in einer ersten Zone (Z₁) nahe an der Öffnung (31; 81) geringer ist als der entsprechende Neigungswinkel (α₂; β₂) in einer zweiten Zone (Z₂), die weiter entfernt von der Öffnung liegt als die erste Zone.

2. Kupplung nach Anspruch 1, **dadurch gekennzeichnet, dass** die Rampe (30, 30') eine dritte Zone (Z₃) umfasst, die weiter entfernt von der Öffnung liegt als die zweite Zone (Z2) und deren Neigungswinkel (α₃) in Bezug auf die Ebene P geringer ist als der Neigungswinkel (α₂) der zweiten Zone.

3. Kupplung nach einem der vorhergehenden Ansprüche, **dadurch gekennzeichnet, dass** die Zonen (Z₁₋Z₃) der Rampe im wesentlichen geradlinig sind.

4. Kupplung nach einem der Ansprüche 1 oder 2, **dadurch gekennzeichnet, dass** die Zonen (Z₁, Z₂, Z₃) der Rampe gekrümmt sind, wobei ihre jeweiligen Neigungswinkel definiert sind als ihre mittleren Neigungswinkel (β₁, β₂) über die Länge jeder Zone.

5. Kupplung nach einem der vorhergehenden Ansprüche, **dadurch gekennzeichnet, dass** der hervorspringende Teil eine Rolle (41, 41') umfasst, die beweglich auf einer radialen Achse (40, 40') montiert ist, wobei der Durchmesser (d) der Rolle kleiner als die Breite (1) der Rampe (30, 30') ist.

6. Kupplung nach einem der vorhergehenden Ansprüche, **dadurch gekennzeichnet, dass** das erste Element (A) geeignet ist, in das zweite Element (B) einzugreifen, wobei der Außendurchmesser (D₁₃) des Ringes (13) kleiner als der Innendurchmesser (d₂₃) einer Hülse (23) des zweiten Elements ist, die mit dem hervorspringenden Teil (40, 40', 41, 41') ausgerüstet ist, das sich radial in Richtung der Achse (X-X') erstreckt.

7. Kupplung nach einem der Ansprüche 1 bis 5, **dadurch gekennzeichnet, dass** das erste Element (B) geeignet ist, das zweite Element (A) zu überdecken , wobei der Innendurchmesser (d₆₃) des Ringes (63) größer ist als der Außendurchmesser (D₇₁) eines Körpers (71) des zweiten Elements, von dem sich radial, entgegengesetzt zur Achse (X-X'), das hervorspringende Teil (90) erstreckt.

8. Kupplung nach einem der vorhergehenden Ansprüche, **dadurch gekennzeichnet, dass** der Ring (13; 63)) mit zwei Rampen (30, 30'; 80) versehen ist, die in etwa diametral gegenüberliegen, während das zweite Element (B; A) mit zwei hervorspringenden Teilen (40, 40', 41, 41'; 90) versehen ist, die gleichfalls diametral gegenüberliegen.

9. Kupplung nach einem der vorhergehenden Ansprüche, **dadurch gekennzeichnet, dass** die Rampe eine Tiefe (p) aufweist, die geringer ist als die Dicke (e) des Ringes (13), wobei die Rampe durch eine Nut (30, 30') gebildet wird, die in eine radiale Fläche (13a) des Ringes eingearbeitet ist.

10. Kupplung nach einem der Ansprüche 1 bis 8, **dadurch gekennzeichnet, dass** die Rampe durch einen Einschnitt (80) gebildet wird, der in den Ring (63) eingearbeitet ist.
